# EUROPÄISCHE PATENTSCHRIFT

(11) **EP 0 910 145 B1**
(45) Veröffentlichungstag und Bekanntmachung des Hinweises auf die Patenterteilung: **21.11.2001**
(21) Anmeldenummer: 98117454.3
(22) Anmeldetag: 15.09.1998
(51) Int. Cl.: H02B 1/26, H02G 3/18

(54) **Rahmen für einen Kassettendeckel**
Frame for a box cover
Cadre pour un couvercle d'une boîte

(30) Priorität: 14.10.1997 DE 29718202 U
(43) Veröffentlichungstag der Anmeldung: 21.04.1999
(73) Patentinhaber: Albert Ackermann GmbH & Co. KG, 51643 Gummersbach (DE)
(72) Erfinder: Raschke, Jörg, 51674 Wiehl (DE)
(74) Vertreter: Patentanwälte Ruff, Wilhelm, Beier, Dauster & Partner

(56) Entgegenhaltungen:
- DE-U- 7 112 816

## Beschreibung

Die Erfindung betrifft einen Rahmen für einen Kassettendeckel, insbesondere einer Zug- oder Abzweigdose eines Unterflur-Elektroinstallationskanals, bestehend aus mehreren, zu einem Ring zusammengesetzten Seitenwandteilen in der Form von L-Profilen, die jeweils wenigstens eine in Führungsrichtung des Rahmens orientierte Führungswand und ein quer zur Führungsrichtung des Rahmens abragendes Fußteil als Montageelement mit einem Fügeabschnitt aufweisen.

Aus dem Katalog 30-57 der Firma Albert Ackermann GmbH & Co. KG, Gummersbach 1994 (Druckvermerk 1108/4.94) ist eine Unterflur-Zug- und Abzweigdose mit einem Blinddeckel bekannt, auf den ein rechteckiger Kassettenrahmen aufgesetzt ist. Der Kassettenrahmen besteht aus mehreren geraden Seitenwandteilen, die in den Eckenbereichen unlösbar zusammengefügt sind. Von den Seitenwandteilen des Kassettenrahmens ragen parallel zum Fußboden vier Montageflansche ab, auf denen der Rahmen aufliegt und die Bohrungen für Befestigungsschrauben aufweisen. In den Kassettenrahmen ist paßgenau eine Kassette einsetzbar, die mit dem Material des Fußbodens gefüllt ist.

Derartige Kassettenrahmen werden in Abhängigkeit vom Einbauraum und von dem Werkstoff, aus dem die Einzelteile hergestellt sind, mit Hilfe unterschiedlicher, aufwendiger und somit teurer Verbindungstechniken, wie beispielsweise Schutzgasschweißen oder Blindnieten, aus den Einzelteilen zu einem Stück zusammengefügt.

Aus dem DE-U-7112816 ist ein Rahmen der eingangs genannten Art bekannt, bei dem ein Deckel mit einem Teppichschutzrahmen umgeben ist, der mit nach innen und außen vorspringenden Abdeckleisten für die Teppichränder versehen und lösbar am Deckel befestigt ist. Der Teppichschutzrahmen besteht dabei aus vier Kunststoffrahmenteilen, die an ihren Stoßkanten mit Verriegelungszapfen und mit entsprechenden Ausnehmungen versehen und durch das Ineinandergreifen dieser Zapfen und Ausnehmungen untereinander verbindbar sind. Durch Einschieben eines zusätzlichen rechtwinklig zum Rahmenteil abragenden Stiftes in eine korrespondierende Bohrung wird der formschlüssige Zusammenhalt erreicht. Der Zusammenbau eines solchen Rahmens ist relativ aufwendig.

Der vorliegenden Erfindung liegt die Aufgabe zugrunde, einen Rahmen der eingangs genannten Art bereitzustellen, der einfach und flexibler herstellbar ist.

Zur Lösung dieser Aufgabe ist in einem ersten Fügeabschnitt wenigstens eines Fußteiles mindestens ein frei abragender, sich nach außen erstreckender Vorsprung und in einem zweiten Fügeabschnitt eines benachbarten Seitenwandteiles eine den Abmessungen des Vorsprunges entsprechende Ausnehmung vorgesehen, in die der Vorsprung formschlüssig einpaßbar ist, und es sind in dem an die Führungswände angrenzenden Kantenbereich des ersten Fügeabschnitts und im Kantenbereich des zweiten Fügeabschnitts ineinandergreifende Verzahnungselemente angeordnet, die mehrere über die Höhe der Führungswände verteilte, in Führungsrichtung des Rahmens wirkende Anschläge bilden. Dadurch lassen sich die Führungswände des Rahmens exakt gegeneinander positionieren. Die Anschläge verhindern ferner ein Auseinanderklaffen der gefügten Führungswände im Kantenbereich, falls der Rahmen von innen quer zur Führungsrichtung des Rahmens belastet wird, da eine Verformung der Führungswände zu einem gegenseitigen Verklemmen der Verzahnungselemente führt.

Derartige Seitenwandteile lassen sich unabhängig vom verwendeten Werkstoff lösbar und ohne aufwendige Verbindungstechniken zu einem Rahmen zusammenstecken, wobei der Rahmen eine gegenüber bekannten Rahmen gleichwertige Stabilität aufweist. Dabei kann das Herstellungsverfahren eines solchen Rahmens auch bei unterschiedlichen Werkstoffen weitgehend unveränderlich bleiben. Ferner können Seitenwandteile aus jeweils nahezu beliebigen Werkstoffen zusammengesetzt werden.

In Ausgestaltung der Erfindung weisen alle Seitenwandteile einen ersten Fügewandabschnitt mit jeweils identischem Vorsprung und einen zweiten Fügeabschnitt mit jeweils identischer, zu dem Vorsprung passender Ausnehmung auf. Dadurch lassen sich Seitenwandteile mit gleichen Außenabmessungen beliebig kombinieren und gegeneinander austauschen.

In weiterer Ausgestaltung der Erfindung sind der Vorsprung in einem zu dem jeweiligen Montageelement gehörenden Teil des ersten Fügeabschnittes und die Ausnehmung in einem zu dem jeweiligen Montageelement gehörenden Teil des zweiten Fügeabschnittes angeordnet und weisen in Führungsrichtung des Rahmens gleichbleibende Querschnittsflächen auf. Dadurch ergeben sich parallel zur Führungsrichtung des Rahmens orientierte Kontaktflächen zwischen Vorsprung und Ausnehmung, die eine genaue Positionierung der Seitenwandteile quer zur Führungsrichtung des Rahmens ermöglichen. Ferner lassen sich über die genannten Kontaktflächen in vorteilhafter Weise Umfangskräfte quer zur Führungsrichtung des Rahmens übertragen.

In weiterer Ausgestaltung der Erfindung sind die Montageelemente im Fußbereich des Rahmens angeordnet und bilden einen umlaufenden Auflageflansch. Eine solche Anordnung gewährleistet eine besonders stabile Lagerung des Rahmens auf einer ebenen Auflagefläche.

Weitere Vorteile und Merkmale der Erfindung ergeben sich aus der Beschreibung, in der ein bevorzugtes Ausführungsbeispiel anhand der Zeichnungen dargestellt ist. Es zeigen:
- Fig. 1: eine Explosionsdarstellung einer Zugdose eines Unterflur-Elektroinstallationskanals mit einem erfindungsgemäßen Rahmen für einen Kassettendeckel,
- Fig. 2: eine vergrößerte Ansicht des Details II in Fig. 2, das einen Eckenbereich des Rahmens darstellt, und
- Fig. 3: eine Gruppendarstellung aller Seitenwandteile vor dem Zusammenfügen, die den Rahmen gemäß Fig. 1 bilden.

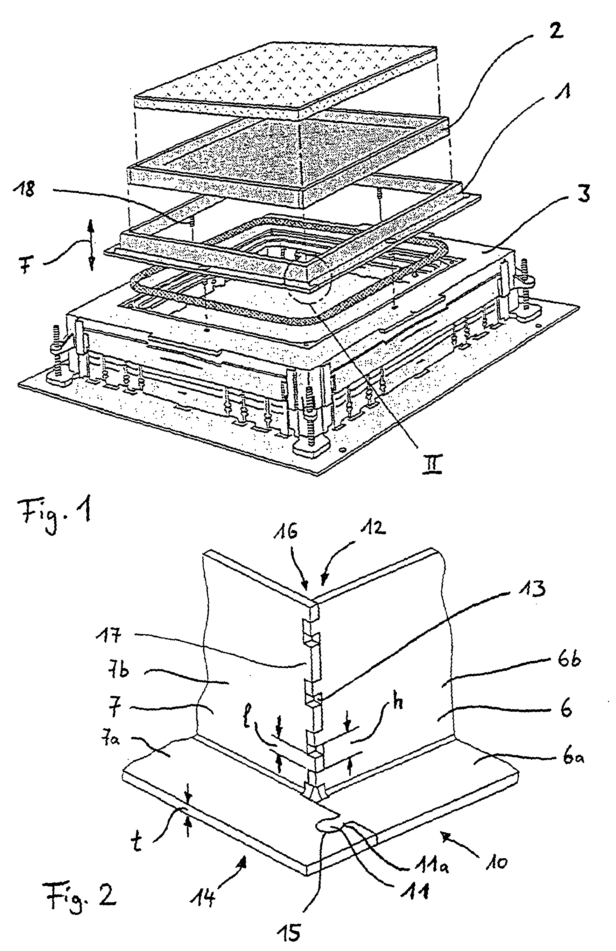

In Fig. 1 ist eine Zugdose 3 für einen Unterflur-Elektroinstallationskanal gezeigt, die mit einem Kassettendeckel 2 versehen ist, der in einem erfindungsgemäßen Rahmen 1 gelagert ist. Der Rahmen 1 besteht aus vier Seitenwandteilen 4, 5, 6, 7, die zu einem Ring mit quadratischer Grundfläche zusammengesetzt sind. Jedes der vier Seitenwandteile 4 bis 7 ist näherungsweise als L-Profil geformt, so daß sich bei jedem Seitenwandteil zwei Abschnitte in Form einer Führungswand 4b, 5b, 6b bzw. 7b sowie ein als Montageelement dienendes Fußteil 4a, 5a, 6a bzw. 7a ergeben. Die Führungswände 4b bis 7b sind dabei parallel, die Fußteile 4a bis 7a senkrecht zu einer Führungsrichtung F des Rahmens orientiert. Da in dem in den Figuren dargestellten Ausführungsbeispiel alle Seitenwandteile weitgehend identisch ausgeführt sind, wird im folgenden exemplarisch das Seitenwandteil 6 erläutert, das gegen jedes andere Seitenwandteil austauschbar ist.

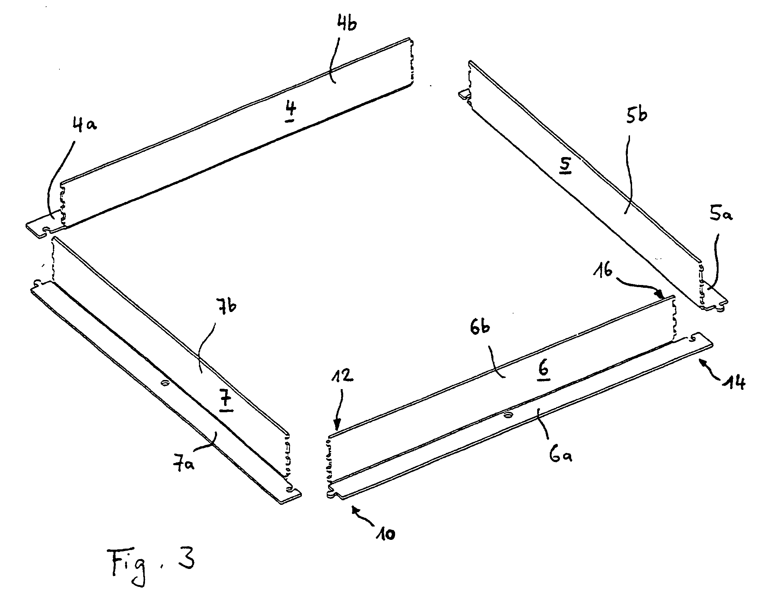

Das Seitenwandteil 6 weist angrenzend an das benachbarte Seitenwandteil 7 einen ersten Fügeabschnitt 10, 12 und angrenzend an das benachbarte Seitenwandteil 5 einen zweiten Fügeabschnitt 14, 16 auf, wie aus Fig. 3 entnehmbar ist. Mit Hilfe dieser Fügeabschnitte läßt sich das Seitenwandteil 6 lösbar mit den benachbarten Seitenwandteilen 7 und 5 zusammenstecken, wobei eine derartige Steckverbindung, die im übrigen in Fig. 2 gesondert dargestellt ist, zwischen einem ersten und einem von diesem verschiedenen zweiten Fügeabschnitt realisierbar ist. Dazu ist in dem ersten Fügeabschnitt 10, 12 ein von dem Fußteil 6a frei abragender Vorsprung 11 vorgesehen, der quer zur Führungsrichtung des Rahmens bauchig ausgeführt ist, so daß sich eine Einschnürung 11a ergibt. Als Bestandteil des zum Fußteil 7a gehörenden Teils 14 des zweiten Fügeabschnittes 14, 16 ist eine Ausnehmung 15 vorgesehen, die den Abmessungen des Vorsprunges 11 entspricht und in die der Vorsprung 11 mit einem vorgebbaren Spiel einsetzbar ist. Ein relativ geringes Spiel läßt ggf. sogar eine reibschlüssige Fixierung der Seitenwandteile gegeneinander zu. Sowohl der Vorsprung 11 als auch die Ausnehmung 15 weisen in Führungsrichtung des Rahmens eine gleichbleibende Querschnittsfläche auf, damit der Vorsprung 11 in Führungsrichtung des Rahmens in der Ausnehmung 15 verschiebbar gelagert und zum anderen eine ausreichende Kontaktfläche zur Kraftübertragung zwischen Vorsprung und Ausnehmung zur Verfügung gestellt ist.

Im Kantenbereich 12 des ersten Fügeabschnitts 10, 12, der die Kontaktstelle zwischen der Führungswand 6b des Seitenwandteils 6 zu der Führungswand 7b des Seitenwandteils 7 darstellt, sind Verzahnungselemente in Form mehrerer Ausnehmungen 13 vorgesehen. Diese Ausnehmungen 13 erstrecken sich quer durch die Führungswand 6b und bilden eine Aufnahme für von der Seitenwand 7b abragende, ebenfalls als Verzahnungselemente dienende Nasen 17. Die Höhenabmessungen der übereinander angeordneten Ausnehmungen 13 sind von unten nach oben zunehmend so ausgeführt, daß die Höhe h der jeweilige Ausnehmung 13 gleich groß oder etwas größer ist als die Summe aus der Höhe 1 der zugehörigen Nase 17 und der Dicke t des Fußteils 7a.

Es wird die ordnungsgemäße Funktion der beschriebenen Steckverbindung dadurch gewährleistet, daß beim Zusammenfügen der beiden Seitenwandteile 6 und 7 zunächst die Nasen 17 mit den Ausnehmungen 13 in Eingriff gebracht werden können, wobei die beiden Seitenteile 6, 7 in Führungsrichtung des Rahmens mindestens um die Dicke t der Fußteile 6a, 7a versetzt gegeneinander angeordnet sind. Danach werden die beiden Seitenteile 6, 7 in Führungsrichtung des Rahmens gegeneinander verschoben, bis die Nasen 17 an die zugehörigen unteren Begrenzungsflächen der Ausnehmungen 13, die als Anschlagflächen wirken, anstoßen, wobei der Vorsprung 11 in die Ausnehmung 15 eintaucht. In der Endstellung sind die beiden Seitenteile dann nicht mehr gegeneinander versetzt, und der Vorsprung ist vollständig in die Ausnehmung eingetaucht.

Die erläuterte Steckverbindung ist an allen vier Ecken des Rahmens 1 vorgesehen und gestattet das problemlose, einfach zu lösende Zusammenfügen der vier Seitenteile 4 bis 7 zu dem Rahmen 1, wobei die vier Fußteile 4a bis 7a nach dem Fügen einen umlaufenden Auflageflansch bilden, der wegen des formschlüssigen Eingriffs aller Vorsprünge 11 in die zugehörigen Ausnehmungen 15 im Fußbereich des Rahmens 1 einen stabilen Ring bildet. Eine ebenfalls lösbare Befestigung des Rahmens 1 an der Zugdose 3 ist daher, wie aus Fig. 1 erkennbar, mit einigen wenigen Schrauben 18 vorgesehen.

Es versteht sich von selbst, daß mit paarweise gleich langen Seitenwandteilen auch rechteckige Rahmen herstellbar sind. Es versteht sich ferner, daß erfindungsgemäße Steckverbindungen nicht nur im Bereich der Ecken eines Rahmens 1, sondern an beliebiger Stelle eines Seitenwandteiles vorsehbar ist, wobei darüber hinaus auch beliebige andere abragende Montageelemente anstelle eines Fußteils oder auch mehrere an der gleichen Umfangsstelle eines Rahmens übereinander angeordnete Montageelemente vorsehbar sind.

Als besonders vorteilhaft erweist es sich bei der vorliegenden Erfindung, daß die erläuterte Steckverbindung aufwendige Fügeverfahren, wie Blindnieten oder Schutzgasschweißen, gleichwertig ersetzt und dadurch ein Rahmen 1 aus beliebigen Werkstoffen ohne besondere Berücksichtigung des Fügeverfahrens herstellbar ist. Dabei ist es sogar möglich, nicht nur Seitenwandteile unterschiedlicher Höhe, Dicke und/oder sonstiger Ausgestaltung, sondern auch Seitenwandteile aus unterschiedlichen Werkstoffen miteinander zu kombinieren. Als einzige Anforderung verbleibt, daß die zusammenzusteckenden Seitenwandteile hinsichtlich ihrer Form korrespondierende Fügeabschnitte aufweisen.

## Patentansprüche

1. Rahmen für einen Kassettendeckel, insbesondere einer Zug- oder Abzweigdose eines Unterflur-Elektroinstallationskanals, bestehend aus mehreren, zu einem Ring zusammengesetzten Seitenwandteilen in der Form von L-Profilen, die jeweils wenigstens eine in Führungsrichtung des Rahmens orientierte Führungswand (4b, 5b, 6b, 7b) und ein quer zur Führungsrichtung des Rahmens abragendes Fußteil (4a, 5a, 6a, 7a) als Montageelement und mit einem Fügeabschnitt aufweisen, **dadurch gekennzeichnet, daß** in einem ersten Fügeabschnitt (10, 12) wenigstens eines Fußteiles (4a bis 7a) mindestens ein frei abragender, sich nach außen erweiternder Vorsprung (11) und in einem zweiten Fügeabschnitt (14, 16) eines benachbarten Seitenwandteiles eine den Abmessungen des Vorsprunges entsprechende Ausnehmung (15) vorgesehen ist, in die der Vorsprung (11) formschlüssig einpaßbar ist und dass in dem an die Führungswände (4b bis 7b) angrenzenden Kantenbereich (12) des ersten Fügeabschnitts (10, 12) und im Kantenbereich (16) des zweiten Fügeabschnitts (14, 16) ineinandergreifende Verzahnungselemente (13, 17) angeordnet sind, die mehrere über die Höhe der Führungswände (4b bis 7b) verteilte, in Führungsrichtung des Rahmens (1) wirkende Anschläge bilden.

2. Rahmen nach Anspruch 1, **dadurch gekennzeichnet, daß** alle Seitenwandteile (4 bis 7) einen ersten Fügeabschnitt (10, 12) mit jeweils identischem Vorsprung (11) und einen zweiten Fügeabschnitt (14, 16) mit jeweils identischer, zu dem Vorsprung (11) passender Ausnehmung (15) aufweisen.

3. Rahmen nach einem der Ansprüche 1 oder 2, **dadurch gekennzeichnet, daß** der Vorsprung (11) in einem zu dem jeweiligen Montageelement (4a bis 7a) gehörigenden Teil (10) des ersten Fügeabschnittes (10, 12) und die Ausnehmung (15) in einem zu dem jeweiligen Montageelement gehörenden Teil (14) des zweiten Fügeabschnittes (14, 16) angeordnet sind und in Führungsrichtung des Rahmens weitgehend gleichbleibende Querschnittsflächen aufweisen.

4. Rahmen nach einem der Ansprüche 1 bis 3, **dadurch gekennzeichnet, daß** als Verzahnungselemente Ausnehmungen (13) vorgesehen sind, deren Höhe (h) mindestens so groß ist wie die Summe der Höhe (1) der als weitere Verzahnungselemente vorgesehenen und der jeweiligen Ausnehmung zugeordneten Nasen (17) und der Dicke (t) der Fußteile (4a bis 7a).

5. Rahmen nach einem der Ansprüche 1 bis 4, **dadurch gekennzeichnet, daß** die Montageelemente (4a bis 7a) im Fußbereich des Rahmens (1) angeordnet sind und einen umlaufenden Auflageflansch bilden.

## Claims

1. Frame for a box lid, in particular a draw-box or junction box of an under-floor electrical installation duct, comprising a plurality of lateral wall elements in the form of L-profile sections which are assembled to form a ring and which each have at least one guide wall (4b, 5b, 6b, 7b), which is orientated in a guiding direction of the frame, and a base element (4a, 5a, 6a, 7a), which projects transversely to the guiding direction of the frame, as an assembly element and with a joint portion, **characterised in that** at least one freely extending, outwardly widening projection (11) is provided in a first joint portion (10, 12) of at least one base element (4a to 7a) and a recess (15), which corresponds to the dimensions of the projection, is provided in a second joint portion (14, 16) of an adjacent lateral wall element, into which recess (15) the projection (11) can be inserted in an interlocking manner, and **in that** toothed elements (13, 17) which engage in each other are arranged in the edge region (12) of the first joint portion (10, 12) that is adjacent to the guide walls (4b to 7b) and in the edge region (16) of the second joint portion (14,16) and form a plurality of stops which are distributed over the height of the guide walls (4b to 7b) and which act in the guiding direction of the frame (1).

2. Frame according to claim 1, **characterised in that** all of the lateral wall elements (4 to 7) have a first joint portion (10, 12), each having an identical projection (11), and a second joint portion (14, 16), each having an identical recess (15) which corresponds to the projection (11).

3. Frame according to either claim 1 or claim 2, **characterised in that** the projection (11) is arranged in an element (10) of the first joint portion (10, 12) that belongs to the respective assembly element (4a to 7a) and the recess (15) is arranged in an element (14) of the second joint portion (14, 16) that belongs to the respective assembly element, the projection (11) and the recess (15) having substantially constant cross-sectional areas in the guiding direction of the frame.

4. Frame according to any one of claims 1 to 3, **characterised in that** there are provided as the toothed elements recesses (13) whose height (h) is at least as great as the sum of the height (l) of the projections (17), which are provided as further toothed elements and which are associated with the respective recess, and the thickness (t) of the base elements (4a to 7a).

5. Frame according to any one of claims 1 to 4, **characterised in that** the assembly elements (4a to 7a) are arranged in the base region of the frame (1) and form a peripheral supporting flange.

## Revendications

1. Cadre pour un couvercle de cassette, notamment une boîte de traction ou de dérivation d'un canal d'installation électrique sous plancher, constitué de plusieurs parties de parois latérales réunies en un anneau sous la forme de profils en L qui présentent chacune au moins une paroi de guidage (4b, 5b, 6, 7b) orientée dans la direction de guidage du cadre et une partie de socle (4a, 5a, 6a, 7a) faisant saillie transversalement à la direction de guidage du cadre comme élément de montage et avec un tronçon de jonction, **caractérisé en ce qu'**il est prévu dans un premier tronçon de jonction (10, 12) d'au moine une partie de socle (4a à 7a) au moins une saillie dépassant librement (11), s'élargissant vers l'extérieur et dans un deuxième tronçon de jonction (14, 16) d'une partie de paroi latérale avoisinante un évidement (15) correspondant aux dimensions de la saillie, dans lequel la saillie (11) peut être insérée par concordance des formes, et **en ce que** sont disposés dans la zone d'arête (12) du premier tronçon de jonction (10, 12) avoisinant les parois de guidage (4b à 7b) et dans la zone d'arête (16) du deuxième tronçon de jonction (14, 16) des éléments de denture (13, 17) s'engageant les uns dans les autres qui forment plusieurs butées réparties sur la hauteur des parois de guidage (4b à 7b), agissant dans la direction de guidage du cadre (1).

2. Cadre selon la revendication 1, **caractérisé en ce que** toutes les parties de parois latérales (4 à 7) présentent un premier tronçon de jonction (10, 12) avec une saillie (11) respectivement identique et un deuxième tronçon de jonction (14, 16) avec un évidement (15) respectivement identique, adapté à la saillie (11).

3. Cadre selon l'une des revendications 1 ou 2, **caractérisé en ce que** la saillie (11) est disposée dans une partie (10) appartenant à l'élément de montage respectif (4a à 7a) du premier tronçon de jonction (10, 12) et l'évidement (15) est disposé dans une partie (14) du deuxième tronçon de jonction (14, 16) appartenant à l'élément de montage respectif et présentent des faces en section transversale sensiblement identiques dans la direction du guidage du cadre.

4. Cadre selon l'une des revendications 1 à 3, **caractérisé en ce que** des évidements (13) sont prévus comme éléments à denture dont la hauteur (h) est au moins aussi grande que la somme de la hauteur (l) des ergots (17) prévus comme éléments à denture ultérieurs et associés à l'évidement respectif et de l'épaisseur (t) des parties de socle (4a à 7a).

5. Cadre selon l'une des revendications 1 à 4, **caractérisé en ce que** les éléments de montage (4a à 7a) sont disposés dans la zone de socle du cadre (1) et forment une bride d'appui s'étendant tout autour.
